# EUROPEAN PATENT APPLICATION

(11) **EP 1 901 018 A1**
(43) Date of publication of application: **19.03.2008**
(21) Application number: 06019079.0
(22) Date of filing: 12.09.2006
(51) Int. Cl.: F27B 3/08, G05F 1/66, H05B 7/144

(54) **Method for forecasting electric energy consumption of a furnace**

(71) Applicant: ABB Oy, 00380 Helsinki (FI)
(72) Inventor: Jaakoo, Junttila, 02240 Espoo (FI); Frank, Simon, 68519 Viernheim (DE)

(57) **Abstract**

In the method and computer software product, the electric energy consumption of a furnace is predicted over a period of time containing at least one interval. In the method and computer software product, an operating plan of an electrically heated furnace is obtained, the operating plan comprising at least the operating situations (A) of the furnace and energy consumption data (1-4) in different operating situations of the furnace. Energy consumption corresponding to each operating situation is chosen from among the energy consumption data, energy consumption data (1-4) are combined with the operating situations (A) of the furnace, the power requirement of the furnace is established, and the power requirement of the furnace is integrated over time intervals (dt) to establish a prediction of energy consumption.

## Description

The object of the invention is a method according to the preamble part of Claim 1 and a computer software product according to the preamble part of Claim 9 for the purpose of predicting the electric energy consumption of a furnace over a period of time.

Electricity consumption by industrial users is metered and billed by metering periods. Depending on the country and region, a metering period can be, for example, 10, 15 or 30 minutes (Central Europe) or 1 hour (Nordic countries). The electric energy consumed during the metering periods is measured, registered and converted to period-specific mean power as necessary. Predicted and actual consumption data is usually reported as mean power specific to each metering period.

Depending on the type of agreement, the price of electricity for the user is comprised of different components, such as an energy fee depending on the amount of energy and a power fee depending on the maximum value of period-specific mean power. Prices can also be linked to a monthly basic power level declared by the user in advance, or a predicted electricity consumption profile presenting mean power specific to each metering period over the next few hours or days.

Energy consumption predictions are necessary for the purpose of estimating and optimising electricity costs. Predictions can be used to plan a facility's operations so that peaks in electricity consumption can be evened out. This allows for the minimisation of the power fee or optimised utilisation of the basic power level declared in advance. If billing is based on a predicted consumption profile, the consumption profile must first be prepared and sent to the electricity supplier, and thereafter one must ensure that the profile is realised sufficiently well in accordance with the prediction as any deviations will cause additional costs.

The significance of prediction is substantial at facilities with a great need for electricity and heavy fluctuation over time. Various kinds of industrial heating and melting furnaces are major consumers of energy, and their energy requirement varies greatly as a function of time. The steel industry is a significant user of electricity, and the largest individual consumers at a steelworks are electric-arc furnaces; the electricity consumption varies steeply during the different stages of operation of these furnaces. An electric-arc furnace is operated in cycles, and its electric energy requirement during a cycle varies greatly as a function of time, typically between 0 and 100 MW. Thus the timing of electric-arc furnace operation has a substantial impact on the mean electric power levels specific to each metering period, and subsequently on the cost of the electricity.

The purpose of the present invention is to create a method and a computer software product for predicting the electric energy consumption of a furnace over a period of time. In order to achieve this the invention is characterised by the features specified in the characteristics sections of Claims 1 and 9. Some other preferred embodiments of the invention have the characteristics specified in the dependent claims.

In the method according to the invention, the electric energy consumption of a furnace is predicted over a period of time containing at least one interval. In the method an operating plan for an electrically heated furnace is obtained, comprising at least the operating situations of the furnace. In the method energy consumption data is obtained in different operating situations of the furnace. The energy consumption corresponding to each operating situation is chosen from among the energy consumption data. The operating situations are combined with the energy consumption data and the power requirement of the furnace is established. The power requirement of the furnace is integrated over intervals in order to create a prediction of energy consumption.

The computer software product according to the invention, stored on computer-readable media, is used to predict the electric energy consumption of the furnace over a period of time. The period of time contains at least one interval. The computer software product comprises means for obtaining an operating plan for an electrically heated furnace comprising at least the operating situations of the furnace, as well as means for obtaining energy consumption data in different operating situations of the furnace. The computer software product comprises means for choosing the energy consumption corresponding to each operating situation, means for combining the energy consumption data with the operating situations of the furnace, means for obtaining the power requirement of the furnace from the combination, and means for integrating the power requirement over intervals in order to create a prediction of energy consumption.

An electric-arc furnace is a potential application for the invention. The electric energy requirement of an electric-arc furnace during an operating cycle (charging, melting, refining, foundering) varies greatly as a function of time, typically between 0 and 100 MW. The duration of one operating cycle during which the furnace is charged with scrap iron that is melted, refined and foundered is in the order of one hour.

The prediction of electric energy consumption is based on the production plan of the steelworks, including an operating plan for the electric-arc furnace or furnaces. The operating plan of a furnace presents the planned operating situations of the electric-arc furnace with starting and ending times. The operating situations of an electric-arc furnace include downtime, start-ups and production runs with different grades and amounts of charges. The most important variables affecting energy consumption include the operating situation, as well as the amount of material being melted during a production run and the properties of the desired final product. On the basis of the operating situation, profiles most closely matching the operating situation, the material being melted and the final product are chosen from among the furnace's electricity consumption profiles specific to one operating cycle, and these are repeated from the start to the end of each interval in the operating situation. The result is a continuous profile that presents the electrical power required by the furnace as a continuous function of time over the entire planned period.

According to a preferred embodiment, a prediction of the furnace's electricity consumption can be obtained by integrating the electrical power of the furnace over each electricity consumption metering period. Integration of the furnace's power requirement starts at the beginning of the electricity consumption metering period immediately preceding the first operating situation, and integration of the furnace's power requirement ends at the finish of the electricity consumption metering period immediately following the last operating situation.

Separate operating plans are drafted for all of the steelworks' furnaces. These are used to establish predictions of electricity consumption, and a total prediction of energy consumption for the steelworks is established by adding up the furnaces and other consumers.

According to an embodiment, electric energy consumption profiles in different operating situations of the furnace, with different properties of the material being melted and different properties of the final product, are obtained by measuring the actual consumption data of the particular furnace. The accuracy of the prediction will improve if the electric energy consumption profiles are measured at substantially more frequent intervals compared with the electricity consumption metering period. The accuracy of the prediction of energy consumption is also affected by the time resolution used for integration, in a preferred case less than one minute.

Suppliers of electric energy typically have different prices for energy, also known as tariffs, depending on the time of energy consumption (season, day of the week, time of the day), as well as the peak power allocated. If the peak power in use is exceeded or the actual electric energy consumption deviates from the advance notification provided to the electricity supplier by more than the permitted margins, this will cause additional costs to the energy consumer through a higher unit price for energy or some other additional charge.

In an embodiment, the prediction of a furnace's electricity consumption is calculated as mean power levels. The predicted mean power requirement for a period of time is established on the basis of the prediction of electric energy consumption by dividing each power requirement of the furnace integrated over electricity consumption metering periods by the electricity consumption metering period.

In an embodiment, there is at least one lower limit and at least one upper limit for the mean power requirement of a furnace's electricity consumption, and when the predicted mean power requirement falls below the lower limit or when the predicted power requirement exceeds the upper limit, the operating plan of the furnace is reviewed. For example, the limits can be deviations allowed by the electricity supplier within which the price of electric energy will not change.

In another embodiment, the predicted mean power requirement of a furnace's electricity consumption is declared to the electricity supplier. In this case the lower limit for the mean power requirement is less than the declared mean power requirement, and the upper limit for the mean power requirement is greater than the declared mean power requirement. When the predicted mean power requirement falls below the lower limit or when the predicted power requirement exceeds the upper limit, the operating plan of the furnace is reviewed. The prediction is submitted to the energy supplier in the morning, for example at 9 am, after which the prediction can be adjusted within one or two hours. If the actual electric energy consumption deviates from the prediction by more than 5...10%, this will cause additional costs to the energy consumer through a higher unit price for energy or some other additional charge, for example.

On the basis of a review of the furnace's operating plan, the operating plan can be left as is or it can be changed. The power of the furnace can be increased or decreased, or the commencement of melting can be postponed or advanced for a few minutes, which will change the distribution of energy between electricity consumption metering periods. When the operation of a furnace is adjusted in this way, the electricity price savings must cover any additional costs arising from the adjustment of the furnace's operating process and any additional costs imposed by the adjustment on other operations of the steelworks.

A preferred way of adjusting the prediction of energy consumption is to update the prediction of the furnace's electricity consumption on-line, for example by synchronising the prediction with the operating state of the furnace using signals obtained from different operating situations. In an electric-arc furnace, for example, the tilt angle of the furnace is such a signal, indicating the beginning of foundering.

In its preferred embodiment, the method for predicting the electric energy consumption of a furnace is implemented using a computer. The programs to be used are stored in the computer's memory or computer-readable media, such as a DVD disc, that can be loaded into an information processing device. The computer-readable media contains instructions that make the computer carry out a certain method.

In the following the invention will be described in more detail with the help of certain embodiments by referring to the enclosed drawings, where
- Figure 1 illustrates the power requirement of an electric-arc furnace during one cycle of melting;
- Figure 2 illustrates the predicted mean power requirement of the electric-arc furnace of Figure 1 over a period of time.

An electric-arc furnace is particularly suitable for melting recycled iron. Heat is generated from electric energy by means of electric arcs formed between the charge and graphite electrodes penetrating the top of the furnace. High-power furnaces often include oil or gas burners to expedite melting. Electric-arc furnace melting - that is, a production run - can be divided into the following sequence of partially overlapping periods: charging (filling the furnace with scrap iron), melting, refining, reduction of slag, alloying, dumping, addition of ladle and foundering (emptying the furnace).

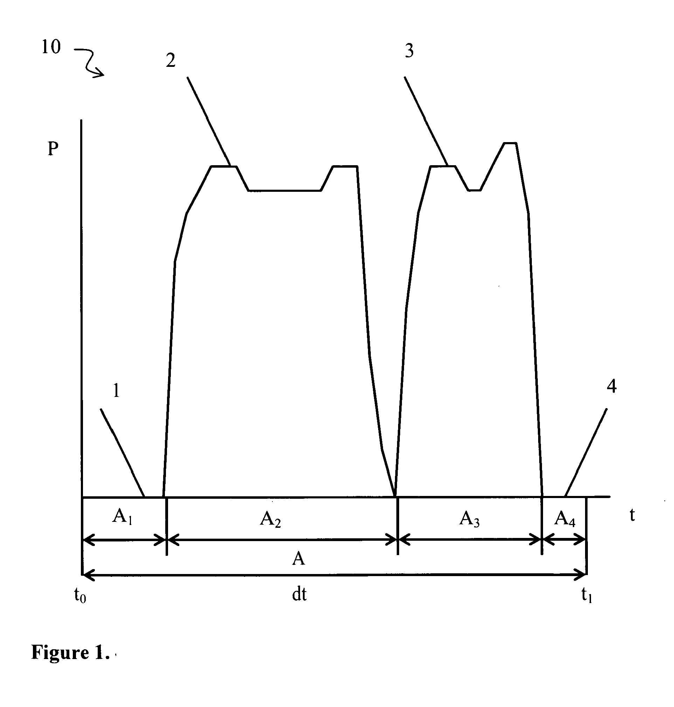

Figure 1 illustrates the power requirement of an electric-arc furnace during one cycle of melting 10. The production plan for a steelworks includes an operating plan for the electric-arc furnace, consisting of information such as planned operating situations, the grade and amount of material to be melted, the quality of the desired final product, and times for the beginning and ending of operating situations. The operating situation presented in Figure 1 is a production run A. Corresponding energy consumption data 1-4 is obtained for the different periods of the production run A on the basis of the grade and amount of the material being melted and the quality of the desired final product. The amount of charge and the desired properties of the end product mainly affect the duration of the part of the operating cycle that consumes electricity - that is, melting and refining. Energy consumption corresponding to the production run A consists of energy consumption data 1-4 for the different periods of the production run A. Energy consumption data refers to the electric power consumption profiles represented as power P as a function of time between the start time t₀ and end time t₁ of the production run. The production run starts at time t₀, for example at 10:00. The first period of the production run is charging the furnace A₁, during which the energy consumption 1 is fairly low. In the second period, during the initial phase of melting A₂, the energy consumption 2 is almost at maximum power. There is a short break in energy consumption close to maximum power between the initial phase of melting A₂ and its final phase, refining A₃. The energy consumption 4 returns to a low level in the final period, during foundering A₄. The end time t₁ of the production run is the completion of foundering A₄ at 10:37.

The power requirement 10 of the electric-arc furnace is used to establish a prediction of the furnace's electric energy consumption in one melting cycle by integrating the furnace's power requirement 10 over the interval dt of one melting cycle from the start t₀ of the production run to the end t₁ of the production run.

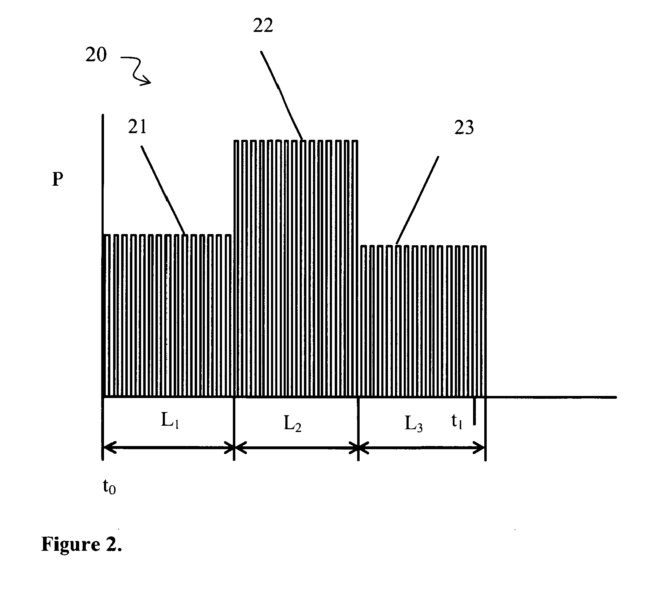

The power requirement 10 of the electric-arc furnace is used to establish a prediction of the electric energy consumption of the furnace for the supplier of electricity by integrating the power requirement 10 of the furnace over electricity consumption metering periods. The electricity consumption metering period is 15 min (L₁, L₂, L₃ in Figure 2). Thus, the interval dt of one melting cycle, which is 37 min, includes several electricity consumption metering periods.

Figure 2 illustrates the predicted mean power requirement 20 of the electric-arc furnace of Figure 1 over a period of time. The electricity consumption metering period L₁, L₂, L₃ is 15 min, and the first consumption metering period L₁ starts exactly at 10:00. The predicted mean power requirement for a period of time is established on the basis of the prediction of electric energy consumption by dividing each power requirement of the furnace integrated over electricity consumption metering periods by the electricity consumption metering period L₁, L₂, L₃. Integration of the furnace's power requirement starts at the beginning of the electricity consumption metering period L₁ immediately preceding the first period of the operating situation, charging of the furnace A₁, and integration of the furnace's power requirement ends at the finish of the electricity consumption metering period L₃ immediately following the last operating situation, foundering A₄. Charging of the furnace and part of the melting cycle fall into the first electricity consumption metering period L₁, and the first mean power requirement 21 is calculated on the basis of the prediction of electric energy consumption for these operations. Part of the melting cycle and part of the refining fall into the second electricity consumption metering period L₂, and the next mean power requirement 22 is calculated on the basis of the prediction of electric energy consumption for these operations. Part of the refining and the entire foundering cycle fall into the final electricity consumption metering period L₃, and the next mean power requirement 23 is calculated on the basis of the prediction of electric energy consumption for these operations. The end time t₁ of the production run is 10:37, which is before the end of the third electricity consumption metering period L₃.

Separate predictions of electric energy consumption are prepared for all furnaces at the steelworks facility, and a prediction of the electric energy consumption of the furnaces is established through a summation of them.

## Claims

1. A method for predicting the electric energy consumption of a furnace over a period of time, said period of time containing at least one interval, **characterised in that**, in the method, an operating plan of an electrically heated furnace is obtained, said operating plan comprising at least the operating situations (A) of the furnace, and in said method, energy consumption data in different operating situations of the furnace is obtained, energy consumption (1-4) corresponding to each operating situation is chosen from among the energy consumption data, energy consumption data (1-4) are combined with the operating situations (A) of the furnace, the power requirement (10) of the furnace is established, and the power requirement of the furnace is integrated over intervals (dt) to establish a prediction of energy consumption.

2. A method according to Claim 1, **characterised in that** the operating situations of the furnace are combined with energy consumption data, said energy consumption data being the electric power consumption profiles (1-4) corresponding to the operating situations.

3. A method according to any of the claims from 1 to 2, **characterised in that** the interval is an electricity consumption metering period (L₁, L₂, L₃).

4. A method according to Claim 3, **characterised in that** the operating plan of the furnace comprises starting times (t₀) and ending times (t₁) for operating situations, that integration of the furnace's power requirement starts at the beginning of the electricity consumption metering period (L₁) immediately preceding the first operating situation (A₁), and that integration of the power requirement ends at the finish of the electricity consumption metering period (L₃) immediately following the last operating situation (A₄).

5. A method according to Claim 4, **characterised in that** the predicted mean power requirement (20) for a period of time is established on the basis of the prediction of electric energy consumption by dividing each power requirement of the furnace integrated over electricity consumption metering periods (L₁, L₂, L₃) by the electricity consumption metering period (L₁, L₂, L₃).

6. A method according to claim 5, **characterised in that** there is at least one lower limit and at least one upper limit for the mean power requirement (20), and when the predicted mean power requirement falls below the lower limit or when the predicted mean power requirement exceeds the upper limit, the operating plan of the furnace is reviewed.

7. A method according to Claim 6, **characterised in that** the predicted mean power requirement (20) is declared to the electricity supplier, the lower limit for the mean power requirement is less than the declared mean power requirement, and the upper limit for the mean power requirement is greater than the declared mean power requirement.

8. A method according to any of the claims from 1 to 7, **characterised in that** the furnace is an electric-arc furnace.

9. A computer software product, stored on media to be processed on a computer, for predicting the electric energy consumption of a furnace over a period of time, said period of time containing at least one interval, **characterised in that** the computer software product comprises means for obtaining an operating plan of an electrically heated furnace that comprises at least the operating situations of the furnace, as well as means for obtaining energy consumption data in different operating situations (A) of the furnace, means for choosing energy consumption (1-4) corresponding to each operating situation, means for combining energy consumption data (1-4) with the operating situations (A) of the furnace, means for establishing the power requirement (10) of the furnace on the basis of the combination, and means for integrating the power requirement of the furnace over intervals (dt) to establish a prediction of energy consumption.

10. A computer software product according to Claim 9, **characterised in that** the computer software product comprises means for integrating the power requirement (10) over intervals formed by electricity consumption metering periods (L₁, L₂, L₃), as well as means for establishing a predicted mean power requirement (20) for a period of time based on the prediction of electric energy consumption by dividing each power requirement of the furnace integrated over electricity consumption metering periods (L₁, L₂, L₃) by the electricity consumption metering period (L₁, L₂, L₃).
